# EUROPEAN PATENT SPECIFICATION

(11) **EP 1 960 228 B1**
(45) Date of publication and mention of the grant of the patent: **14.10.2009**
(21) Application number: 06831621.5
(22) Date of filing: 01.12.2006
(51) Int. Cl.: B60N 2/00, G01G 19/414

(54) **METHOD FOR MOUNTING A SEAT PROVIDED WITH WEIGHT SENSORS ON A MOTORCAR FRAME**
VERFAHREN ZUR BEFESTIGUNG EINES MIT GEWICHTSSENSOREN VERSEHENEN SITZES AN EINEM KRAFTFAHRZEUGRAHMEN
PROCEDE DE MONTAGE D'UN SIEGE, EQUIPE DE CAPTEURS DE POIDS, SUR UN CHASSIS D'UN VEHICULE AUTOMOBILE

(30) Priority: 02.12.2005 IT BO20050736
(43) Date of publication of application: 27.08.2008
(73) Proprietor: FERRARI S.p.A., 41100 Modena (IT)
(72) Inventor: TIBERI, Leonardo, I-62029 Tolentino (IT)
(74) Representative: Maccagnan, Matteo
(86) International application number: PCT/IB2006/003435
(87) International publication number: WO 2007/063404

(56) References cited:
- EP-A- 1 503 190

## Description

### TECHNICAL FIELD

The present invention relates to a method for mounting a seat provided with weight sensors on a motorcar frame.

### BACKGROUND ART

A modern car is provided with a number of safety devices having the function of protecting the physical safety of the occupants in case of accident. One of the most widespread safety devices is the airbag, which comprises a flexible bag which is inflated extremely rapidly in case of collision (detected by accelerometric sensors) in virtue of a small explosive charge.

Some standards (e.g. standard US 208) contemplate that an airbag must not be activated when the seat is occupied by an infant; for this reason, it is necessary to recognise with extreme certainty whether a seat protected by an airbag is occupied by a child/adult or whether it is occupied by an infant. This indication may be provided in different ways, among which the most widespread is the presence of a switch which deactivates the intervention of the airbag which is controlled by means of a lock operated by the ignition key of the vehicle.

However, such method is not deemed fully reliable (and is expressly forbidden for example by standard US 208), because it is based on the correctness of actions of the driver who must provide to manually deactivate/reactivate the intervention of the airbag. For such reason, alternative solutions have been suggested, among which it is recalled using proximity sensors to assess the "dimensions" of the passenger on the seat, using radiofrequency recognition systems (transponders or the like) to determine the presence of a cradle (which must be provided with a transponder or the like), or using weight sensors to determine the weight of the passenger on the seat.

For example patent US6366200 describes a system adapted to detect the weight of a passenger occupying a seat by means of weight sensors to determine if the seat is empty, if the seat is occupied by an infant, or if the seat is occupied by an adult; specifically, the seat is considered empty if the weight detected by the weight sensors is lower than a first threshold value, the seat is considered occupied by an adult if the weight detected by the weight sensors is greater than a second threshold value, and the seat is considered occupied by an infant if the weight detected by the weight sensors is comprised between the first threshold value and the second threshold value.

In the currently marketed airbags the internal pressure and the inflated volume of the bag are constant and determined beforehand; it has recently been proposed a new generation of airbags (called "smart airbags"), which° may be controlled to choke the inflation of the bag and therefore to obtain a variable internal pressure and/or volume of the bag. Specifically, the volume and/or the internal pressure of the inflated bag are varied according to the weight of the occupant of the seat, so as to adapt the features of the bag to the morphological features of the occupant of the seat. An example of a "smart airbag" is provided by patent US6532408.

From the description above, it is apparent that an assembly system of a seat provided with a measuring device of the occupant's weight is required.

By way of example, documents US6039344, W00100454 and EP142624 describe an assembly system with measurement of the occupant's weight for a motorcar seat, wherein the seat is slidingly mounted on a sliding guide, which is in turn supported by a supporting frame mounted in floating manner on the motorcar frame by means of the interposing of four weight sensors.

Document EP 1 503 190, which discloses all the features of the preamble of claim 1, is considered to be the closest prior art.

The assembly systems with measurement of the occupant's weight known and described above present the drawback of requiring a high constructive precision (i.e. very low constructive tolerances) of the motorcar frame at the seat attachments in order to guarantee the correct operation. However, when the motorcar frame is made by joining several metallic extrusions by means of welding or riveting, the motorcar frame itself normally presents tolerances not compatible with the tolerances required for the correct operation of the weight sensors. Alternatively, a motorcar frame made by joining several metallic extrusions may have the necessary precision only by using extremely costly machining, assembly and inspection equipment; furthermore, operating with the tolerances required by the weight sensors would imply a high percentage of frame rejects with a further increase of costs.

Alternatively, it has been proposed to mount the sliding guide of the seat on an upper support frame, which is in turn mounted in floating manner by means of the interposition of four weight sensors on a lower supporting frame which is rigidly connected to the motorcar frame. The lower supporting frame is rigidly connected to the chassis of the motorcar by means of a plurality of bolts, which are inserted in through holes in the lower supporting frame and which are fastened in corresponding threaded holes made in the motorcar frame; the through holes of the lower supporting frame are made so as to allow a recovery of the constructive tolerances of the motorcar frame. In this way, the weight sensors are not mounted on the motorcar frame which presents a constructive tolerance in the order of 4-5 mm, but are mounted on the lower supporting frame which presents constructive and assembly tolerances in the order of 1-2 mm. However, the use of the lower supporting frame increases the total weight of the seat and generally leads the motorcar frame to inevitable stresses/deformations at the fixing points with the lower supporting frame itself.

### DISCLOSURE OF INVENTION

It is the object of the present invention to provide a method for mounting a seat provided with weight sensors on a motorcar frame, which method is easy and cost-effective to implement and which is, at the same time, free from the drawbacks described above.

According to the present invention, a method is provided for mounting a seat provided with weight sensors on a motorcar frame according to what is recited in the accompanying claims.

### BRIEF DESCRIPTION OF THE DRAWINGS

The present invention will now be described with reference to the accompanying drawings which illustrate some non-limitative examples of embodiment thereof, in which:
- figure 1 schematically shows an exploded perspective view of an assembly system with measurement of the occupant's weight for a seat of a motorcar with parts removed for clarity;
- figure 2 shows a portion of a motorcar frame in section and with parts removed for clarity;
- figure 3 shows a further portion of a motorcar frame in section and with parts removed for clarity;
- figure 4 shows a detail of the frame in figures 2 and 3 in section and with parts removed for clarity.

### BEST MODE FOR CARRYING OUT THE INVENTION

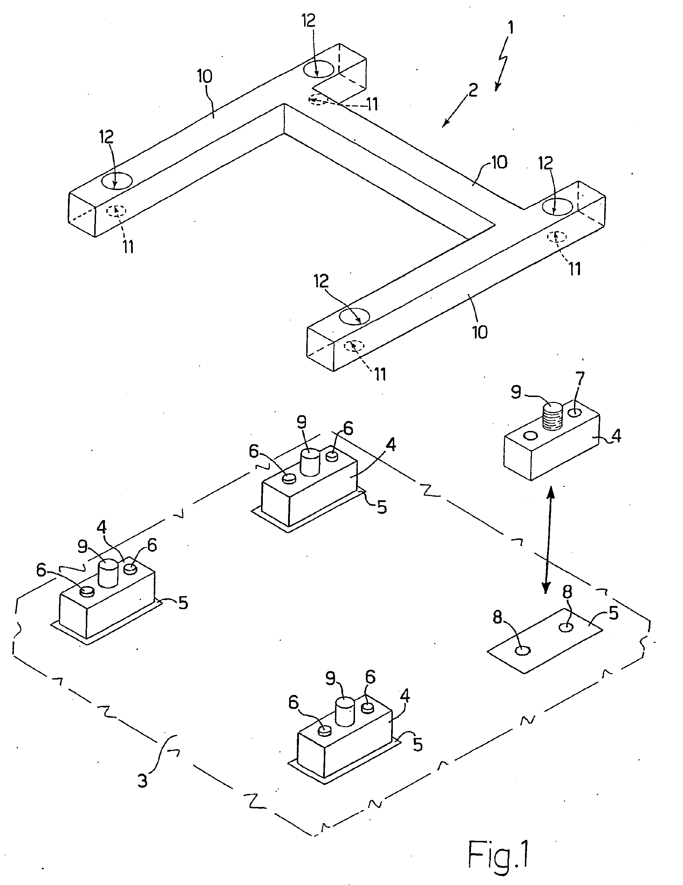

In figure 1, numeral 1 indicates an assembly system with measurement of the occupant's weight for a seat (not shown) of a motorcar.

Assembly system 1 comprises a supporting frame 2 carrying the seat and mounted in a floating manner on a frame 3 of the motorcar by means of the interposition of four weight sensors 4, each of which is rigidly connected both to supporting frame 2, and to frame 3. Each weight sensor 4 rests on a flat resting area 5 of frame 3 and is rigidly connected to frame 3 by means of a pair of bolts 6; each bolt 6 is arranged through a through hole 7 of weight sensor 4 and is fastened within a blank threaded hole 8 obtained through frame 3.

Each weight sensor 4 presents a bolt 9, which is vertically arranged in central position, is integrated in weight sensor 4, and is used to connect weight sensor 4 itself to supporting frame 2 by means of a respective nut (not shown). It is important to underline that bolt 9 is considered integrated in weight sensor 4, both when bolt 9 is permanently connected to weight sensor 4 itself (e.g. by means of welding or by co-moulding), and when bolt 9 is fastened into a specific threaded hole of weight sensor 4 itself.

Supporting frame 2 consists of the union (typically by means of welding) of three metallic profiles 10 having a boxed section. At each weight sensor 4, supporting frame 2 presents a lower through hole 11 through a lower wall of supporting frame 2 and is adapted to receive bolt 9 integrated in weight sensor 4. At each weight sensor 4, supporting frame 2 further presents an upper hole 12, which is over and coaxial to lower hole 11 and has a dimension so as to allow the passage of the corresponding nut and of a tool for fastening the nut itself.

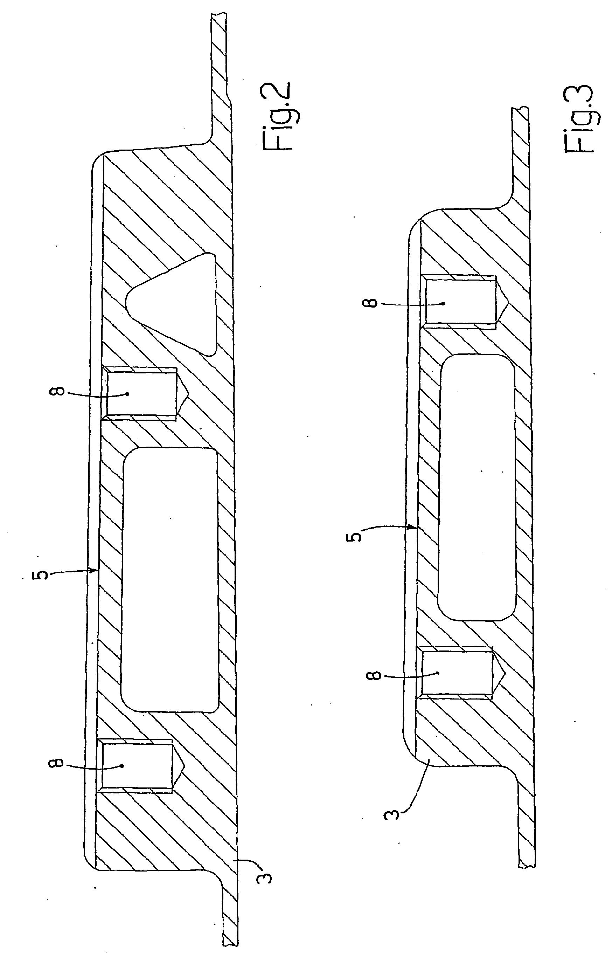

As better shown in figures 2 and 3, frame 3 is solid, i.e. presents a relatively high full thickness, at the fastenings of screws 6 on resting areas 5 so as to allow the drilling and threading to obtain holes 8. Instead, outside resting areas 5 frame 3 has a boxed section so as to contain the total weight of frame 3 and to facilitate the welding and/or the riveting of the components of frame 3 itself.

In the components of frame 3, resting areas 5 are left rough and are subjected to a precise machining by means of a machine tool only once the assembly of frame 3 of is completed. Specifically, once the assembly of frame 3 is completed, each resting area 5 is flattened by milling and then at each resting area 5 two holes 8 are made by drilling and subsequent threading. In this way, all the inaccuracies related to the assembly of frame 3 may be compensated; so each resting area 5 presents the required tolerances both in relation to planarity, and in relation to parallelism, and each hole 8 presents the required tolerances both in relation to position, and in° relation to perpendicularity.

In other words, by machining frame 3 after the completion of frame 3 is it possible to cancel out all the constructive errors of frame 3 itself; consequently, the only constructive errors of resting areas 5 and of holes 8 are introduced by the more precise machining by means of the machine tool.

It is important to note that each resting area 5 displays machining allowance, i.e. displays a greater thickness with respect to the required final thickness, so as to be able to machine resting area 5 by removal of material (typically by milling).

Experimental tests have shown that by operating as illustrated above, resting areas 5 and holes 8 present the required tolerances of 1-2 mm also if frame 3 as a whole presents tolerances of 4-5 mm. Furthermore, the fact of working resting areas 5 only after completing the assembly of frame 3 is simple and cost-effective to implement in the working cycle of frame 3 itself.

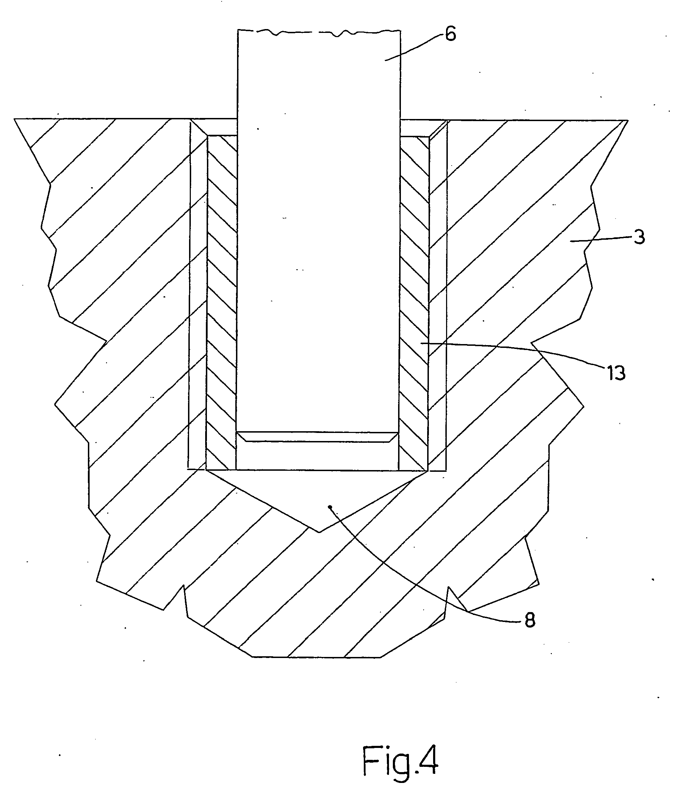

According to a preferred embodiment shown in figure 4, when frame 3 is formed by aluminium, then within each hole 8 a tubular steel insert 13, which is both external and internally threaded, is fastened; in this way, each tubular insert 13 is externally fastened with hole 8 and internally fastened with bolt 6. The function of tubular inserts 13 is to involve a greater strength section of aluminium frame 3 in the tightening of bolts 6 to increase the fastening force of weight sensors 4 to frame 3; in this way, weight sensors 4 are capable of more easily withstanding the pulling loads of the seat belt in case of accident. By way of example, tubular insert 13 may have an external diameter of 12 mm and bolt 6 may have an external diameter of 8 mm.

## Claims

1. A method of mounting a seat provided with weight sensors (4) on a motorcar frame (3); the method comprising the steps of:
rigidly connecting to the motorcar frame (3) a number of weight sensors (4), each of which rests on a flat resting area (5) of the motorcar frame (3) and is rigidly connected to the motorcar frame (3) by means of a number of first bolts (6) fastened in first threaded holes (8) obtained through the motorcar frame (3) itself; and
rigidly connecting to weight sensors (4) a supporting frame (2) carrying the seat, so that the supporting frame (2) appears mounted in floating manner on the motorcar frame (3) the by means of the interposition of the weight sensors (4);
the method is **characterised in** comprising the further steps of:
making the motorcar frame (3) essentially solid and with machining allowance at the resting areas (5);
completing the making of the motorcar frame 3) leaving the resting areas (5) rough; and
precision machining each rough resting area (5), after completing the making of the motorcar frame (3), by means of a machine tool by a flattening by milling and then a drilling and threading to make the fist holes (8).

2. A method according to claim 1, wherein each first bolt (6) is arranged through a second through hole (7) of the weight sensor (4) and is fastened within a first blank threaded hole (8) obtained through the motorcar frame (3).

3. A method according to claim 1 or 2, wherein each weight sensor (4) presents a second bolt (9), which is vertically arranged in central position, is integrated in the weight sensor (4), and is used to connect the weight sensor (4) itself to the supporting frame (2) by means of a respective nut (10).

4. A method according to claim 1, 2 or 3, wherein the motorcar frame (3) is boxed outside the resting areas (5) .

5. A method according to one of the claims from 1 to 4, and comprising the further step of fastening within each first hole (8) a tubular insert (13), which is both externally and internally threaded.

6. A method according to claim 5, wherein the frame is formed by aluminium and the tubular inserts (13) are formed by steel.

7. A method according to one of the claims from 1 to 6, wherein the making of the frame (3) of the motorcar comprises joining by welding and/or riveting a plurality of boxed extrusions.

## Patentansprüche

1. Verfahren zum Befestigen eines mit Gewichtssensoren (4) versehenen Sitzes an einem Kraftfahrzeugrahmen (3), wobei das Verfahren die folgenden Schritte aufweist:
starres Verbinden mehrerer Gewichtssensoren (4) mit dem Kraftfahrzeugrahmen (3), wobei jeder der Gewichtssensoren auf einem ebenen Auflagerbereich (5) des Kraftfahrzeugrahmens (3) aufsitzt und mit dem Kraftfahrzeugrahmen (3) mittels mehrerer erster Bolzen (6), welche in ersten, durch den Kraftfahrzeugrahmen (3) selbst vorgesehenen Gewindebohrungen (8) befestigt sind, starr verbunden wird; und
starres Verbinden eines Trägerrahmens (2), welcher den Sitz trägt, mit den Gewichtssensoren (4) derart, dass der Trägerrahmen (2) mittels der Zwischenanbringung der Gewichtssensoren (4) in schwimmender Weise auf dem Kraftfahrzeugrahmen (3) angebracht vorgesehen ist;
**dadurch gekennzeichnet, dass** das Verfahren die folgenden weiteren Schritte aufweist:
Ausbilden des Kraftfahrzeugrahmens (3) im Wesentlichen aus einem Vollmaterial und mit einem Aufmaß für eine Bearbeitung in den Auflagerbereichen (5);
Abschließen der Herstellung des Kraftfahrzeugrahmens (3), wobei die Auflagerbereiche (5) rau belassen werden; und
Feinbearbeiten jedes rauen Auflagerbereiches (5) nach dem Abschluß der Herstellung des Kraftfahrzeugrahmens (3) mittels einer Werkzeugmaschine durch ein Abflachen mittels Fräsbearbeitung und anschließend durch ein Bohren und Gewindeschneiden zur Herstellung der ersten Bohrungen (8).

2. Verfahren nach Anspruch 1, wobei jeder erste Bolzen (6) durch eine zweite Durchgangsbohrung (7) des jeweiligen Gewichtssensors (4) angeordnet wird und in einer ersten, durch den Kraftfahrzeugrahmen (3) vorgesehenen Gewindesackbohrung (8) befestigt wird.

3. Verfahren nach Anspruch 1 oder 2, wobei jeder Gewichtssensor (4) einen zweiten Bolzen (9) aufweist, welcher in einer Mittenposition vertikal angeordnet ist, in den Gewichtssensor (4) integriert ist und zum Verbinden des Gewichtssensors (4) selbst mit dem Trägerrahmen (2) mittels einer zugehörigen Mutter (10) verwendet wird.

4. Verfahren nach Anspruch 1, 2 oder 3, wobei der Kraftfahrzeugrahmen (3) außerhalb der Auflagerbereiche (5) kastenartig ausgebildet wird.

5. Verfahren nach einem der Ansprüche 1 bis 4, welches den weiteren Schritt des Befestigens eines röhrenförmigen Einsatzes (13), welcher sowohl außen als auch innen mit einem Gewinde versehen ist, in jeder ersten Bohrung (8) aufweist.

6. Verfahren nach Anspruch 5, wobei der Rahmen mit Aluminium ausgebildet wird und die röhrenförmigen Einsätze (13) mit Stahl ausgebildet werden.

7. Verfahren nach einem der Ansprüche 1 bis 6, wobei die Herstellung des Rahmens (3) des Kraftfahrzeugs ein Fügen einer Vielzahl von durch Pressverfahren hergestellten kastenförmigen Bauteilen mittels Verschweißen und/oder Vernieten beinhaltet.

## Revendications

1. Procédé de montage d'un siège muni de détecteurs de poids (4) sur un châssis d'automobile (3) ; le procédé comprenant les étapes consistant à :
connecter de manière rigide au châssis d'automobile (3) un certain nombre de détecteurs de poids (4), dont chacun repose sur une zone d'appui plate (5) du châssis d'automobile (3) et est connecté de manière rigide au châssis d'automobile (3) à l'aide d'un certain nombre de premiers boulons (6) attachés dans des premiers trous filetés (8) obtenus à travers le châssis d'automobile (3) lui-même ; et
connecter de manière rigide aux détecteurs de poids (4) un cadre de support (2) soutenant le siège, de manière à ce que le cadre de support (2) apparaisse monté de manière flottante sur le châssis d'automobile (3) à l'aide de l'interposition des détecteurs de poids (4) ;
le procédé étant **caractérisé en ce qu'**il comprend les étapes supplémentaires suivantes consistant à :
fabriquer le châssis d'automobile (3) de manière à ce qu'il soit sensiblement solide avec des surépaisseurs d'usinage au niveau des zones d'appui (5) ;
compléter la fabrication du châssis d'automobile (3) en laissant les zones d'appui (5) à l'état brut ; et
réaliser un usinage de précision sur chaque zone d'appui à l'état brut (5), après avoir terminé la fabrication du châssis d'automobile (3), à l'aide d'une machine-outil par un aplatissage par fraisage puis par un forage et un filetage pour fabriquer les premiers trous (8).

2. Procédé selon la revendication 1, dans lequel chaque premier boulon (6) est agencé à travers un second trou débouchant (7) du détecteur de poids (4) et est fixé dans un premier trou fileté vide (8) obtenu à travers le châssis d'automobile (3).

3. Procédé selon la revendication 1 ou 2, dans lequel chaque détecteur de poids (4) présente un second boulon (9), qui est agencé verticalement dans une position centrale, intégré dans le détecteur de poids (4) et utilisé pour connecter le détecteur de poids (4) lui-même au cadre de support (2) à l'aide d'un écrou (10) respectif.

4. Procédé selon la revendication 1, 2 ou 3, dans lequel le châssis d'automobile (3) est compartimenté en dehors des zones d'appui (5).

5. Procédé selon l'une des revendications 1 à 4, comprenant l'étape supplémentaire consistant à fixer dans chaque premier trou (8) une pièce d'insertion tubulaire (13) filetée à l'extérieur et à l'intérieur.

6. Procédé selon la revendication 5, dans lequel le châssis est constitué d'aluminium et les pièces d'insertion tubulaires (13) sont constituées d'acier.

7. Procédé selon l'une des revendications 1 à 6, dans lequel la fabrication du châssis (3) de l'automobile comprend le raccord par soudage et/ou rivetage d'une pluralité d'extrusions compartimentées.
